# EUROPEAN PATENT APPLICATION

(11) **EP 2 701 270 A2**
(43) Date of publication of application: **26.02.2014**
(21) Application number: 13179586.6
(22) Date of filing: 07.08.2013
(51) Int. Cl.: H02J 7/00

(54) **Battery backup system and method**

(30) Priority: 23.08.2012 SE 1250949
(71) Applicant: Actia Nordic AB, 191 49 Sollentuna (SE)
(72) Inventor: Sahlén, Christian, 591 62 Motala (SE); Willerton, Mark, 592 42 Vadstena (SE)
(74) Representative: Bokinge, Ole

(57) **Abstract**

A battery backup system for a mobile telematic system comprises a main power input (10), arranged to provide power to the mobile telematic system (14), a first battery (16'), arranged to provide a first battery input, and means (12) for monitoring the main power input (10) and, when the main power input falls below a first predetermined value, causing the first battery (16') input to provide power to the mobile telematic system (14). The system further comprises a second battery (16"), arranged to provide a second battery input, and means (19) for monitoring the first and second battery inputs and, when the first battery input falls below a second predetermined value, causing the second battery (16") to provide power to the mobile telematic system and, when the second battery input falls below a third predetermined value, causing the remainder of the first battery (16') to provide power to the mobile telematic system. The first battery (16') is a rechargeable battery and the second battery (16") other one is non-rechargeable.

## Description

### Technical Field

The present invention relates to a battery backup system. The system finds particular use in the automotive sector, as battery backup for emergency systems, such as telematic systems in vehicles, such as cars, trucks, busses, tractors or other heavy vehicles.

### Background

Telematic systems are becoming of increasing interest in the automotive sector. Systems providing for vehicle tracking, emergency calls, remote diagnosis and to some extent also remote control of certain functions of the vehicle, are already available on the market.

In particular emergency and emergency related functions, such as vehicle tracking and emergency calls, need to be available at all times in order to remain effective, also when the vehicle is parked for an extended period of time or when the main power supply, such as the main battery, is disconnected or damaged.

Hence, it is known to provide a battery backup system, where a control circuit is used to monitor the power supply from the main battery and switch to a backup battery in case the power from the main battery is lost or falls below a predetermined level. Such a backup battery has to meet certain criteria, which may be the available energy, given by the formula E ½CV², where E is energy, C is charge and V is voltage. In such a system, the backup battery may be a rechargeable or a non-rechargeable battery. Disadvantages of rechargeable batteries include the limited ability to operate over a large temperature range and the reduction in time of the capacity to store energy. A disadvantage of non-rechargeable batteries is that they are single use products, and thus may have to be replaced in case the main battery has been disconnected for a while.

Hence, there is a need for an improved battery backup system.

### Summary

An objective of the present disclosure is to provide a mobile telematic system with an improved battery backup system. A particular object is to provide a battery backup system which is capable of meeting the expected requirements of future legislation but at the same time, to provide a system which copes sufficiently with real world events. The invention combines non-rechargeable and rechargeable battery technologies to achieve these goals. The combination serves to solve the shortcomings when only one battery technology is used (as described in the section 'Background'). The rechargeable battery copes with the real world events such as removal of the main power input from the vehicle and provides a limited amount of energy to the system for critical events. The non-rechargeable battery provides sufficient energy to support the system during the remainder of a critical event, therefore allowing fulfillment of legislation. The invention is defined by the appended independent claims. Embodiments are set forth in the dependent claims, in the following description and in the drawings.

According to a first aspect, there is provided a mobile telematic system, comprising a main power input, arranged to provide power to the mobile telematic system, a first battery, arranged to provide a first battery input, and means for monitoring the main power input and, when the main power input falls below a first predetermined value, causing the first battery input to provide power to the mobile telematic system. The first battery is a rechargeable battery and the second battery is a non-rechargeable battery. The system comprises a second battery, arranged to provide a second battery input, and battery control means, adapted for monitoring the first and second battery inputs. The battery control means is arranged to: when the first battery input falls below a second predetermined value, cause the second battery to provide power to the mobile telematic system and, when the second battery input falls below a third predetermined value, cause the remainder of the first battery to provide power to the mobile telematic system.

The system thus comprises a main power input, arranged to provide power to the mobile telematic system, a first battery which is rechargeable and a second battery which is non-rechargeable. The system further comprises a means of monitoring the voltage of the main power input and causes the first (rechargeable) battery to provide power to the mobile telematic system when the voltage on the main power input falls to a level which cannot support correct system operation. The system further comprises a means of monitoring the voltage of the first battery and causes the second (rechargeable) battery to provide power to the mobile telematic system when the voltage on the first battery falls to a level which may cause damage (capacity loss) in the first battery. The system further comprises a means of monitoring the voltage of the second battery and causes the first battery to again provide power to the mobile telematic system using its remaining energy.

The "main power input" may be an input from a main battery or a generator.

The term "battery" is understood as a device for storing electric energy. The battery may be formed of one or more cells.

The term "chargeable" implies that the battery is of a type which is effectively rechargeable, i.e. can be operated as a rechargeable battery.

The term "non-rechargeable" implies that the battery is of a type which can or should not be subjected to any effective recharging.

For example, the first predetermined value may be based on a minimum operating voltage ("critical voltage" or "reset threshold") for the relevant electronic circuit, and on a factor which may be arbitrarily set, such as e.g. a percentage (e.g. adding 0.5-10%) of this minimum voltage level. Hence, the first predetermined value may e.g. be 101% of the minimum operating voltage.

With such a system, real world events which may occur often but which require little energy are supported by the rechargeable battery which can be replenished. On the other hand, critical events that occur more seldom but which require more energy are supported first by the rechargeable battery and thereafter by the non-rechargeable battery. If such a critical event is so long in duration that the non-rechargeable battery becomes depleted (and therefore requires replacement), the rechargeable battery is allowed to support system operation beyond its critical voltage level (and therefore also needs replacement) until depleted.

The second predetermined value may be determined as a function of a value at which the first battery is expected to become permanently damaged.

For example, the second predetermined value may be based on a voltage level (which is battery-specific and normally provided by the battery manufacturer) and on a factor which may be arbitrarily set, such as e.g. a percentage (e.g. adding 0.5-10%) of this minimum voltage level. Hence, the second predetermined value may e.g. be 101% of the minimum voltage level.

The third predetermined value may be determined as a function of a value at which the mobile telematic system cannot function.

For example, the third predetermined value may be based on a minimum operating voltage ("critical voltage" or "reset threshold") for the relevant electronic circut, and on a factor which may be arbitrarily set, such as e.g. a percentage (e.g. adding 0.5-10%) of this minimum voltage level. Hence, the third predetermined value may e.g. be 101% of the minimum operating voltage.

The voltages based on which the first, second and third predetermined values are provided may, but need not, be different from each other.

The main power input monitoring means may comprise a first voltage monitor and a first switch.

The first battery input monitoring means comprises a second voltage monitor and a second switch.

According to a third aspect, there is provided a method for providing power to a mobile telematic system. The method comprises providing, during normal operation, power to the mobile telematic system from a main power input, monitoring the main power input, and when the main power input falls below a first predetermined value, causing a first battery input to provide power to the mobile telematic system. The method further comprises monitoring the first battery input, and when the first battery input falls below a second predetermined value, causing a second battery to provide power to the mobile telematic system. The method further comprises monitoring the second battery input, and when the second battery input falls below a third predetermined value, causing the first battery to provide power to the mobile telematic system using its remaining energy.

The first battery is a rechargeable battery and the second battery is a non-rechargeable battery.

The second predetermined value may be determined as a function of a value at which the first battery is expected to become permanently damaged.

The thrid predetermined value may be determined as a function of a value at which the mobile telematic system cannot function.

### Brief Description of the Drawings

Fig. 1 is a schematic diagram of a prior art battery backup system.
Fig. 2 is a schematic diagram of a battery backup system according to the present disclosure.

### Description of Embodiments

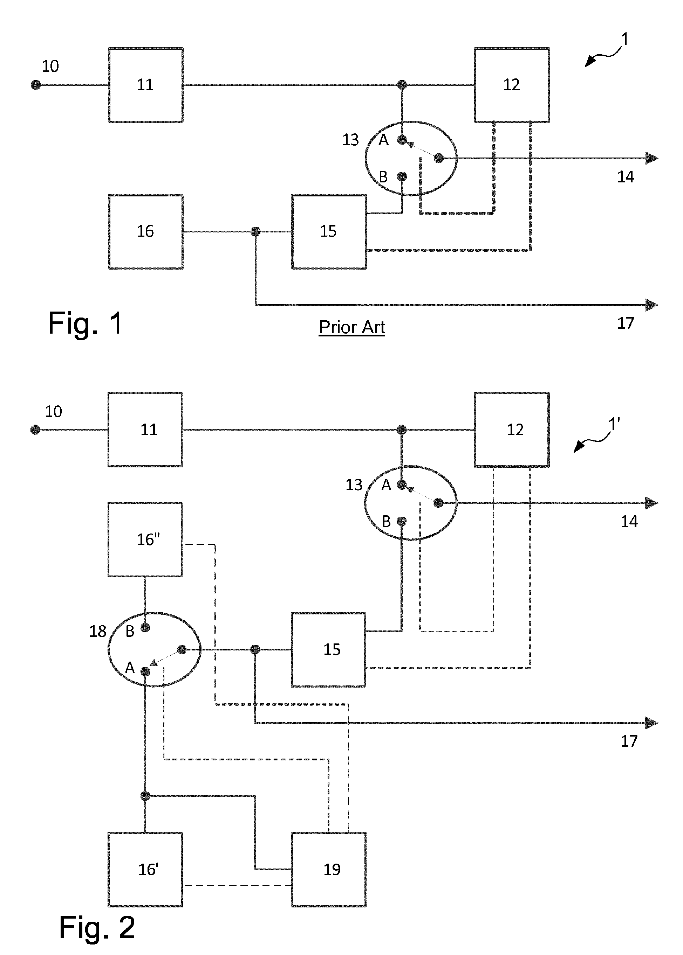

Fig. 1 illustrates a battery backup system 1 according to the prior art. The system comprises a main power input 10, which may be provided by a battery (e.g. 12 V or 24 V) and/or a mains connection. In a specific embodiment, the main power input may be in the form of a KL30 standard input, which is generally used in automobiles.

The main power input 10 is connected via an input protection 11 to a monitoring device 12. The input protection 11 may be arranged to suppress overvoltages or reverse voltages, etc. The monitoring device 12 monitors the input 10, and controls a switch 13, which is arranged to control which power source is being used. Solid lines represent power connections and dashed lines represent control connections.

The output from the switch 13 is supplied to the system 14 which is being powered by the battery backup system 1. The output may be supplied via one or more voltage regulators.

The system 14 receiving the output from the switch 13 may be a telematic system, such as a vehicle tracking system, emergency call system, remote diagnosis system and/or a remote control system.

The voltage provided by the battery backup input 16 may be converted and/or stabilized in a voltage converter and/or regulator 15. The voltage converter and/or regulator 15 can be switched to the inactive state by the monitoring device 12 when the battery backup input 16 is not used. This can save unnecessary consumption of energy from the vackup battery input 16. A continuous (e.g. uninterrupted) supply 17 from the backup battery 16 may be provided in the event that the system 14 being powered so requires.

During operation, the monitoring device 12 may e.g. monitor the voltage level of the input 10, and if a critical level is reached, cause the switch 13 to switch from main power input 10 to battery backup input 16.

The battery 16 may be a rechargeable battery, composed of one or more battery cells which are connected in series and/or in parallel; or a non-rechargeable battery, composed of one or more battery cells which are connected in series and/or in parallel.

Referring to Fig. 2, the battery backup system 1' according to the present invention will now be described. Components having the same function as those of Fig. 1 are given the same reference numerals and will not be further explained.

In Fig. 2, the battery backup input 16 has been replaced for a pair of batteries, including a first battery 16' and a second battery 16", a second switch 18 and a battery backup monitor 19.

The first battery 16' is a rechargeable battery and the second battery 16" is a non-rechargeable battery. The battery backup monitor 19 is arranged to monitor the voltage of the first battery 16' and to cause the second switch 18 to switch to the second battery 16" in the event that the voltage of the first battery 16' reaches an intermediate level.

This intermediate level is typically battery-specific and provided as a basic battery specification by the battery manufacturer. The switching may take place at this minimum voltage level or at a level determined as a function, e.g. a percentage of this voltage level.

The battery backup monitor 19 is further arranged to monitor the voltage of the second battery 16" and to cause the second switch 18 to switch back to the first battery 16' in the event that the voltage of the second battery 16" reaches a critical level.

The critical level of the second battery is typically determined as a critical voltage level of the circuit that is to be powered. Such a level may be determined as a minimum voltage level at which the circuit is able to function. Such levels are also provided as a part of the specification of the components forming parts of the electric circuit.

The battery backup monitor 19 may be operable only when the battery backup is activated, i.e. when the first switch 13 is at position B.

The battery backup of Fig. 2 may operate as follows. During normal operation of the system, where the main power input 10 is active, the first battery 16' may be charged. Control of the charging may be achieved by a separate system, which is not further described herein. In the alternative, the charging may be controlled by a controller which is integrated with the battery backup monitor 19 and/or with the main input monitor 12.

Upon interruption or reduction of the main power input 10, the main input monitor 12 causes the first switch 13 to switch from position A to position B, thus activating the battery backup and causing it to supply power from the first battery 16' to the system 14. This is achieved since the second switch 18 is at its default position A.

Upon interruption or reduction of the input from the first battery 16', the battery backup controller causes the second switch 18 to change to its second position B, thus activating the second battery 16", which is a non-rechargeable battery.

When the second battery 16" reaches the circuit's critical voltage level, the battery monitor 19 switches switch 18 back to position A so that the remainder of the first battery 16' can be used.

Hence, the system comprises a first battery 16', which is being recharged and which operates as the first backup battery, and a second, nonrechargeable battery 16", which operates as the second backup battery.

The monitors 12, 19 may be integrated with each other to form a single component, or provided as separate components. In any event, the components may be provided in the form of an electronic circuit or as a programmable device.

The switches 13, 18 may be provided in the form of transistor based switches or as mechanical switches, such as a relay.

Batteries, monitors, switches and any other electronic components, circuits or software needed to implement the disclosure above are deemed to be per se known to the skilled person and thus require no further description.

Recharging of the first battery 16' may be performed by a separate circuit or in a circuit which is integrated with the control circuit, of which the monitor 18 forms part.

## Claims

1. A mobile telematic system having a battery backup system, comprising:
a main power input (10), arranged to provide power to the mobile telematic system (14),
a first battery (16'), arranged to provide a first battery input, and
means (12) for monitoring the main power input (10) and, when the main power input falls below a first predetermined value, causing the first battery (16') input to provide power to the mobile telematic system (14),
wherein the first battery is a rechargeable battery and the second battery is a non-rechargeable battery,
**characterized by**
a second battery (16"), arranged to provide a second battery input, and
battery control means, adapted for monitoring the first and second battery inputs, wherein the battery control means is arranged to:
when the first battery input falls below a second predetermined value, cause the second battery (16") to provide power to the mobile telematic system and,
when the second battery input falls below a third predetermined value, cause the remainder of the first battery (16') to provide power to the mobile telematic system.

2. The mobile telematic system as claimed in claim 1, wherein the second predetermined value is determined as a function of a value at which the first battery is expected to become permanently damaged.

3. The mobile telematic system as claimed in claim 1 or 2, wherein the thrid predetermined value is determined as a function of a value at which the mobile telematic system cannot function.

4. The mobile telematic system as claimed in any one of the preceding claims, wherein said main power input monitoring means comprises a first voltage monitor (12) and a first switch (13).

5. The mobile telematic system as claimed in any one of the preceding claims, wherein said battery control means comprises a second voltage monitor (19) and a second switch (18).

6. A method for providing power to a mobile telematic system, comprising:
providing, during normal operation, power to the mobile telematic system from a main power input,
monitoring the main power input, and
when the main power input falls below a first predetermined value, causing a first battery input to provide power to the mobile telematic system,
wherein the first battery is a rechargeable battery and the second battery is a non-rechargeable battery,
**characterized by**
monitoring the first battery input, and
when the first battery input falls below a second predetermined value, causing a second battery to provide power to the mobile telematic system,
monitoring the second battery input, and
when the second battery input falls below a third predetermined value, causing the remainder of the first battery (16') to provide power to the mobile telematic system.

7. The method as claimed in claim 6, wherein the second predetermined value is determined as a function of a value at which the first battery is expected do become permanently damaged.

8. The method as claimed in claim 6 or 7, wherein the thrid predetermined value is determined as a function of a value at which the mobile telematic system cannot function.
